# EUROPÄISCHE PATENTSCHRIFT

(11) **EP 2 467 606 B1**
(45) Veröffentlichungstag und Bekanntmachung des Hinweises auf die Patenterteilung: **14.09.2016**
(21) Anmeldenummer: 10734068.9
(22) Anmeldetag: 06.07.2010
(51) Int. Cl.: F04D 25/06, F04D 29/66, H02K 5/24, F04D 29/42

(54) **ENTKOPPLUNG EINES ANTRIEBSMOTORS**
VIBRATIONAL DECOUPLING OF A DRIVING MOTOR
DÉCOUPLAGE VIBRATOIRE D'UN MOTEUR D'ENTRAÎNEMENT

(30) Priorität: 20.08.2009 DE 102009028745
(43) Veröffentlichungstag der Anmeldung: 27.06.2012
(73) Patentinhaber: Robert Bosch GmbH, 70442 Stuttgart (DE)
(72) Erfinder: MUELLER, Andreas, 71735 Eberdingen (DE); SCHIEL, Andreas, 76593 Gernsbach-Lautenbach (DE); EISENHARDT, Harald, 71277 Rutesheim (DE); LUDWIG, Matthias, 76547 Sinzheim (DE)
(86) Internationale Anmeldenummer: PCT/EP2010/059602
(87) Internationale Veröffentlichungsnummer: WO 2011/020645

(56) Entgegenhaltungen:
- WO-A1-00/36730
- DE-A1- 4 342 582
- US-A1- 2005 200 211
- US-A1- 2008 143 198
- US-A1- 2008 296 985

## Beschreibung

Die Erfindung betrifft ein Antriebsmodul. Insbesondere betrifft die Erfindung ein Antriebsmodul für einen Lüfter in einem Kraftfahrzeug.

### Stand der Technik

Antriebsmodule sind standardisierte, separat handhabbare Baugruppen, die universell eingesetzt werden können. Ein Einsatzgebiet eines solchen Antriebsmoduls ist eine Lüfteranlage in einem Kraftfahrzeug, bei dem zwischen einem Ansaugtrakt für Frischluft und einem Verteiltrakt für geförderte Luft ein Lüfter angeordnet ist. Ein solcher Lüfter kann mit Hilfe eines Antriebsmoduls aufgebaut sein, so dass eine Ein- bzw. Ausbauzeit des Lüfters minimiert ist und zudem eine Zugänglichkeit von Komponenten, die sich in den angrenzenden Trakten befinden, beispielsweise eines Wärmetauschers oder einer Heizung, verbessert ist.

Bei Antriebsmodulen allgemein und bei einem Antriebsmodul zum Einsatz in einem Lüfter im Besonderen ist häufig eine Entkopplung des Antriebsmotors von dessen Umgebung bezüglich Schwingungen jeder Art erforderlich, um materialermüdende Vibrationen und Körperschall zu minimieren. Zum Entkoppeln werden üblicherweise elastische Entkopplungselemente verwendet, wie beispielsweise Stahlfedern. Eine übliche Entkopplung erfordert zusätzlichen Bauraum, etwa in axialer Richtung auf einer dem Abtrieb angewandten Seite oder in einer radialen Richtung des Antriebsmoduls. Dadurch ist das resultierende Antriebsmodul größer und weniger flexibel in seiner Verwendung.

US 2005/200211 A1 zeigt ein Antriebsmodul mit einem Stator und einem den Statur umlaufenden Rotor. Die Befestigung des Antriebsmoduls erfolgt mittels eines Flanschs, der sich in radialer Richtung vom Stator erstreckt. US2008/0296985 A1 zeigt ein Antriebsmodul mit einem Stator, der mittels mehreren Entkoppelungselementen mit einem Flansch verbunden ist.

US2008/143198 A1 zeigt ein Antriebsmodul für einen Deckenlüfter mit einem Stator, der mittels mehreren Entkopplungselementen mit einer Achse verbunden ist.

Die zweiteilige Formulierung des ersten Anspruchs entspricht dem Ausführungsbeispiel der Abbildungen 6 und 7 dieses Dokuments US 2008/143198 A1.

### Offenbarung der Erfindung

Der Erfindung liegt die Aufgabe zugrunde, eine Anordnung von schwingungsdämpfenden Entkopplungselementen an einem Antriebsmodul anzugeben, die vorteilhaft bezüglich Funktion und Bauraum ist.

Die Aufgabe wird gelöst durch ein Antriebsmodul nach Anspruch 1 und ein Lüftermodul nach Anspruch 6. Unteransprüche geben mögliche bzw. vorteilhafte Ausgestaltungen an.

Nach einem ersten Aspekt umfasst ein Antriebsmodul insbesondere für einen Lüfter in einem Kraftfahrzeug, einen Antriebsmotor mit einem Stator, wenigstens ein schwingungsdämpfendes Entkopplungselement und einen Befestigungsflansch der über das Entkopplungselement mit dem Stator des Antriebsmotors verbunden ist, wobei das Entkopplungselement im Innenraum des Stators angeordnet ist und der Befestigungsflansch ein Stützelement aufweist, das sich im Eingriff mit dem Entkopplungselement befindet. Dabei sind mehrere Entkopplungselemente entlang eines Umfangs um die Drehachse des Antriebsmotors radialsymmetrisch angeordnet.

Dadurch kann eine Positionierung der Entkopplungselemente in axialer Richtung hinter dem Antriebsmotor oder radial außerhalb des Antriebsmotors vermieden werden, wodurch das Antriebsmodul kompakter aufgebaut sein kann. Außerdem kann ein Raum innerhalb des Stators, der ansonsten nicht für Bauelemente des Antriebsmoduls nutzbar wäre, vorteilhaft verwendet werden. Durch die gegebene Anordnung wird die Führung einer konzentrischen Welle oder Achse des Antriebsmotors nicht beeinträchtigt.

Das Entkopplungselement ist als Hohlzylinder ausgebildet, der eine mit dem Stützelement in Eingriff stehende radiale Innenfläche und eine mit dem Stator in Eingriff stehende radiale Außenfläche umfasst. Beispielsweise kann das Entkopplungselement in Form einer langgestreckten Hülse ausgeführt sein, so dass es auch vergleichsweise große Kräfte übertragen kann, wie sie beispielsweise bei geringem Abstand der Entkopplungselemente von der Drehachse des Antriebsmotors auftreten können.

Der Stator umfasst eine erste und eine zweite Halterung, wobei jede Halterung das Entkopplungselement in einer axialen Richtung lagert. Das Entkopplungselement kann so bereits dauerhaft am Stator fixiert sein, noch bevor dieser am Befestigungsflansch befestigt ist. Zudem kann das Entkopplungselement derart beschaffen sein, dass es mittels Reibschluss mit den beiden Halterungen des Stators verbunden ist, so dass eine Handhabung des Stators im Rahmen eines Produktionsprozesses vereinfacht ist. Zusätzlich kann jede Halterung in radialer Richtung an dem Entkopplungselement anliegen.

Das Stützelement kann auf einer dem Befestigungsflansch zugewandten Seite einen Absatz aufweisen, der axial an dem Entkopplungselement anliegt. Dadurch kann ein minimaler Abstand zwischen dem Stator und dem Befestigungsflansch definiert sein.

Das Stützelemente kann auf einer dem Befestigungsflansch abgewandten Seite ein Sicherungselement tragen, das axial an den Entkopplungselementen anliegt. Das Sicherungselement kann eine schnelle einmalige Montage gewährleisten. Dadurch kann beispielsweise der das Entkopplungselement umfassende Stator in einem einzigen Arbeitsgang auf das axiale Stützelement des Befestigungsflansches aufgeschoben und dort mit einem Sicherungselement auf dem Stützelement gesichert werden. Diese Anordnung erlaubt auch eine Vibrationsentkopplung des Stators vom Befestigungsflansch in axialer Richtung.

Der Stator kann von einem Rotor des Antriebsmotors umschlossen sein. Bei einer solchen Konstellation mit Außenrotor kann ein besonders hoch integriertes Antriebsmodul durch die gegebene Anordnung der Entkopplungselemente auf der Innenseite des Stators verwirklicht sein.

Der Befestigungsflansch kann in radialer Richtung eine Außenkontur des Antriebsmoduls definieren. Dadurch kann ein Abschnitt des Antriebsmoduls durch eine Fixierungs- bzw. Montageöffnung einer Befestigungsstruktur so eingeführt werden, dass der Befestigungsflansch anschließend die Öffnung verschließt und das Antriebsmodul in der Öffnung lagert. Der Befestigungsflansch kann weitere Elemente aufweisen, um beispielsweise einen Abschluss mit der umgebenden Struktur oder einen luft- bzw. wasserdichten Abschluss bezüglich dieser Struktur auszubilden, etwa eine Dichtung, einen Auflagering und/oder Verriegelungselemente. Darüber hinaus kann der Befestigungsflansch beispielsweise ein elektrisches Anschlusselement für den Antriebsmotor, beispielsweise einen Stecker oder eine Buchse, umfassen.

Nach einem zweiten Aspekt umfasst ein Lüftermodul ein Antriebsmodul mit einem Antriebsmotor mit Außenrotor und ein mit dem Außenrotor verbundenes Lüfterrad. Das Lüfterrad kann so geformt sein, dass der Antriebsmotor den durch das Lüfterrad definierten Raum weitgehend ausfüllt, so dass das Lüftermodul besonders kompakt ist. Insbesondere kann das Lüfterrad einen halbaxialen Aufbau mit einer dem Antriebsmotor zugewandten konkaven Begrenzung aufweisen.

### Kurze Beschreibung der Figuren

Im Folgenden wird die Erfindung mit Bezug auf die beigefügten Zeichnungen genauer beschrieben, in denen:
- Figur 1 eine schematische Darstellung einer Lüfteranlage in einem Kraftfahrzeug;
- Figur 2 eine isometrische Ansicht einer Explosionszeichnung eines Teils des Antriebsmoduls aus Figur 1;
- Figur 3 eine Schnittansicht des montierten Teils aus Figur 2; und
- Figur 4 eine Schnittansicht eines Lüftermoduls unter Verwendung des montierten Teils aus Figur 3

### darstellt.

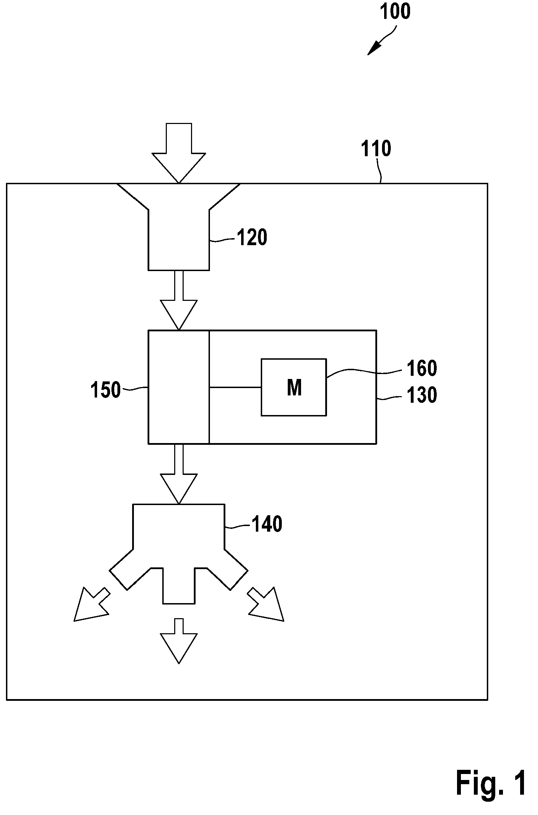

Figur 1 zeigt eine schematische Darstellung einer Kraftfahrzeug-Lüfteranlage 100. Ein Kraftfahrzeug 110 umfasst einen Ansaugtrakt 120, ein Lüftermodul 130 und einen Verteiltrakt 140. Das Lüftermodul 130 umfasst ein Lüfterrad 150 und ein Antriebsmodul 160. In der Darstellung von Figur 1 nicht enthalten sind optionale Elemente der Kraftfahrzeug-Lüfteranlage 100, wie Filter, Klappen, Ventile, Wärmetauscher, Kondensatoren und ähnliche, die im vorliegenden Zusammenhang nicht weiter relevant sind. Das Antriebsmodul 160 versetzt das Lüfterrad 150 in Drehung, so dass Luft von einer Außenseite des Kraftfahrzeugs 110 durch den Ansaugtrakt 120 in das Lüfterrad 150 eingesogen und anschließend durch den Verteiltrakt 140 auf die Innenseite des Kraftfahrzeugs 140 gefördert wird. Ein Einsatz des Lüftermoduls 130 in einer Lüftungsanlage außerhalb eines Kraftfahrzeugs 110 ist ebenfalls möglich.

Häufig sind der Ansaugtrakt 120 und der Verteiltrakt 140 in einem integrierten Trakt gemeinsam ausgeführt. Das Lüftermodul 130 kann nach Art einer Kartusche in den Ansaugtrakt 120, den Verteiltrakt 140 oder den integrierten Trakt einsetzbar sein. In der Umgebung des Lüftermoduls 130 kann der betreffende Trakt ein Element aufweisen, das eine radiale Strömungsrichtung von aus dem Lüfterrad 150 abgeströmter Luft in eine lineare Strömungsrichtung umsetzt, beispielsweise eine Druckerhöhungsspirale, die zudem die vom Lüfterrad 150 abgeströmte Luft abbremst und verdichtet.

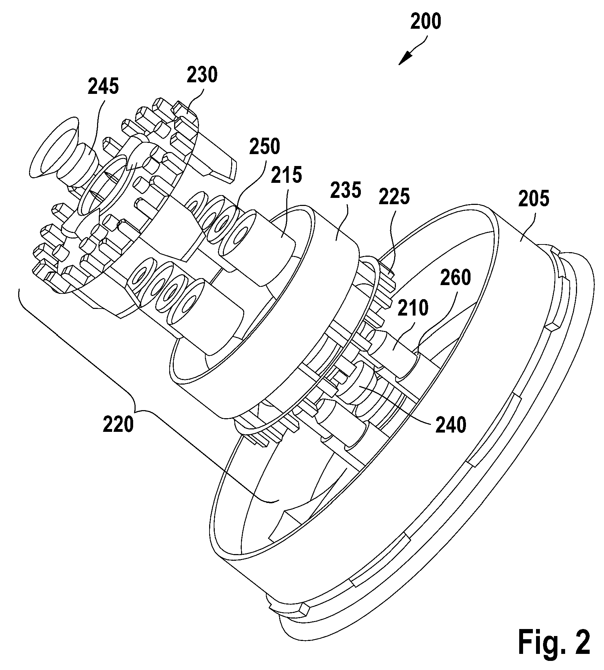

Figur 2 zeigt eine isometrische Darstellung einer Explosionszeichnung eines Teils 200 des Antriebsmoduls 160. Der dargestellte Teil 200 umfasst einen Befestigungsflansch 205 mit vier axialen Stützelementen 210 sowie einen mittels vier elastischen Entkopplungselementen 215 mit dem Befestigungsflansch 205 koppelbaren Stator 220. Die Entkopplungselemente 215 bestehen aus einem elastischen Material, das vorzugsweise hohe Eigendämpfung aufweist, beispielsweise Silikon oder Gummi. Der Stator 220 umfasst eine erste Halterung 225 und eine zweite Halterung 230, ein erstes magnetisches Flusselement 235, ein unteres Rotationslager 240, ein oberes Rotationslager 245 und Sicherungselemente 250. Die Stützelemente 210 weisen Absätze 260 auf.

Der Stator 220 ist derart ausgebildet, dass er als separat handhabbare Einheit am Befestigungsflansch 205 montiert werden kann. Dazu werden zwischen der ersten Halterung 225 und der zweiten Halterung 230 das erste Flusselement 235 und die vier Entkopplungselemente 215 an den entsprechend vorgesehenen Positionen eingesetzt, bevor die erste Halterung 225 mit der zweiten Halterung 230 verbunden wird. Sind die erste Halterung 225 und die zweite Halterung 230 miteinander verbunden, so sind die Entkopplungselemente 215 und das erste

Flusselement 235 jeweils in axialer Richtung beidseitig durch die beiden Halterungen 225 und 230 begrenzt. Eine die beiden Halterungen 225 und 230 aneinander fixierende Klemmwirkung ist durch einen Reibschluss zwischen dem Außenumfang der Entkopplungselemente 215 und den entsprechenden radialen Aufnahmen der unteren Halterung 225 bzw. der oberen Halterung 230 bedingt. Ferner besteht ein Reibschluss zwischen dem Innenumfang des ersten magnetische Flusselements 235 und den Halterungen 225 und 230. Derart fixiert kann eine Wicklung (bzw. Spulen) auf den Stator 220 aufgebracht werden, die eine Anzahl Leiterabschnitte umfasst, die sich in axialer Richtung entlang der Umfänge der Halterungen 225 und 230 erstrecken. Diese Drahtstücke können mittels der sich in axialer Richtung erstreckenden Vorsprünge der Halterungen 225 und 230 fixiert sein. Zusammen mit dem ersten magnetischen Flusselement 235 (auch: Kurzschlussblech oder: Fluxblech) können die Wicklungen Spulen bzw. Elektromagneten zur magnetischen Kopplung mit einem den Stator 220 umschließenden Rotor bilden.

Das untere Rotationslager 240 und das obere Rotationslager 245 sind drehstabil mit der ersten Halterung 225 bzw. der zweiten Halterung 230 verbunden und zur Aufnahme einer mit dem Stator verbundenen Achse oder Welle ausgebildet. In einer alternativen Ausführungsform kann eines oder beide der Lager 240 und 245 auch drehbar bezüglich der sie umgebenden Halterungen 225, 230 ausgeführt sein.

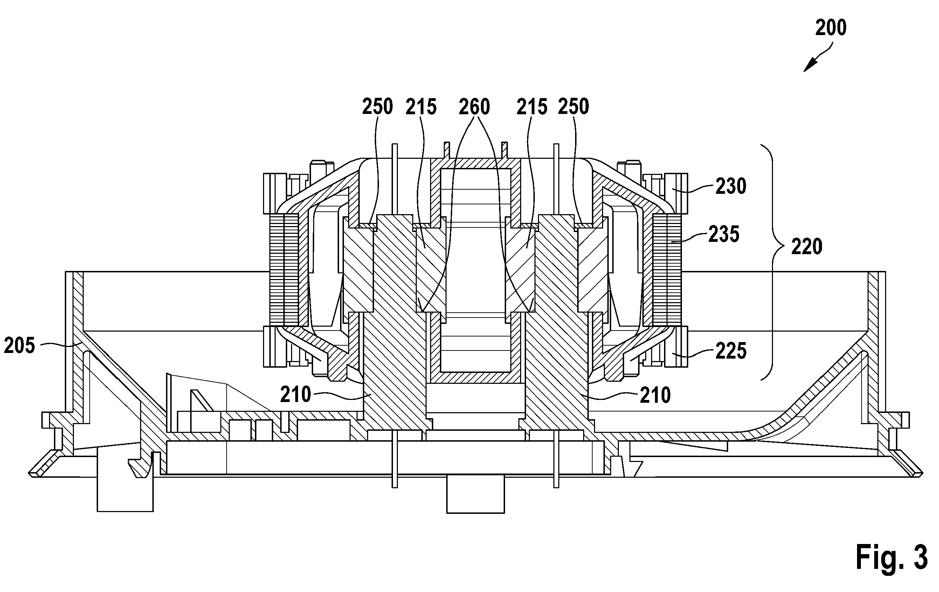

Figur 3 zeigt eine seitliche Schnittansicht des montierten Teils 200 des Antriebsmoduls 160 aus Figur 2. Nicht dargestellt sind das untere Rotationslager 240 und das obere Rotationslager 245. Die näherungsweise hohlzylindrischen Entkopplungselemente 215 liegen an ihrem Innenumfang formschlüssig an den Stützelementen 210 an. Die Entkopplungselemente 215 sind in axialer Richtung nach unten durch Absätze 260 in den axialen Stützelementen 210 und nach oben mittels der Sicherungselemente 250 an den Stützelementen 210 fixiert. Die Sicherungselemente 250 können beispielsweise selbstsperrende Sicherungsringe sein. Alternativ dazu können die Sicherungselemente 250 beispielsweise auf einen Endabschnitt des Stützelements 210 aufgepresst oder dieses in sie eingepasst sein. Die Endabschnitte der Stützelemente 210 können dazu konisch ausgeformt sein. In einer weiteren Ausführungsform sind die Sicherungselemente 250 beispielsweise mittels Kleben, Schweißen, Umschmelzen, Löten, Schrauben oder auf eine weitere bekannte Verbindungsweise kraftschlüssig mit den Stützelementen 210 verbunden.

Das Entkopplungselement 215 weist in axialer Richtung an seinen beiden Stirnflächen jeweils koaxiale Ausnehmungen auf, in die hohlzylindrische Eingriffselemente der ersten Halterung 225 bzw. der zweiten Halterung 230 des Stator 220 eingreifen, so dass das Entkopplungselement 215 sowohl in radialer als auch in axialer Richtung gegenüber dem Stator 220 fixiert ist.

Das axiale Stützelement 210 ist einstückig mit dem Befestigungsflansch 205 ausgebildet, wobei in einer alternativen Ausführungsform auch ein mehrstückiger Aufbau möglich ist. Das Stützelement 210 weist einen radialen Abstand zur ersten Halterung 225 auf. Die Größe des Abstands definiert einen maximalen Kompressionsweg des Entkopplungselements 215, wenn der Stator 220 gegenüber dem Befestigungsflansch 205 ausgelenkt wird. Ein großer Abstand fördert eine Absorption auch starker Vibrationen, erlaubt jedoch gleichzeitig eine relativ große Auslenkung des Stators 220 gegenüber dem Befestigungsflansch 205, so dass die Position des Stators bzw. eines mit ihm verbundenen Elements weniger genau definiert ist.

Der radiale Kontakt des Sicherungselements 250 zur zweiten Halterung 230 des Stators 220 ist optional. Das erste magnetische Flusselement 235 ist durch eine Anzahl aufeinandergestapelter Ringe aus einem weichmagnetischen Material gebildet. Alternative Ausführungsformen, beispielsweise in Form eines einstückigen oder mehrstückigen Zylinders oder einer Spirale sind ebenfalls möglich.

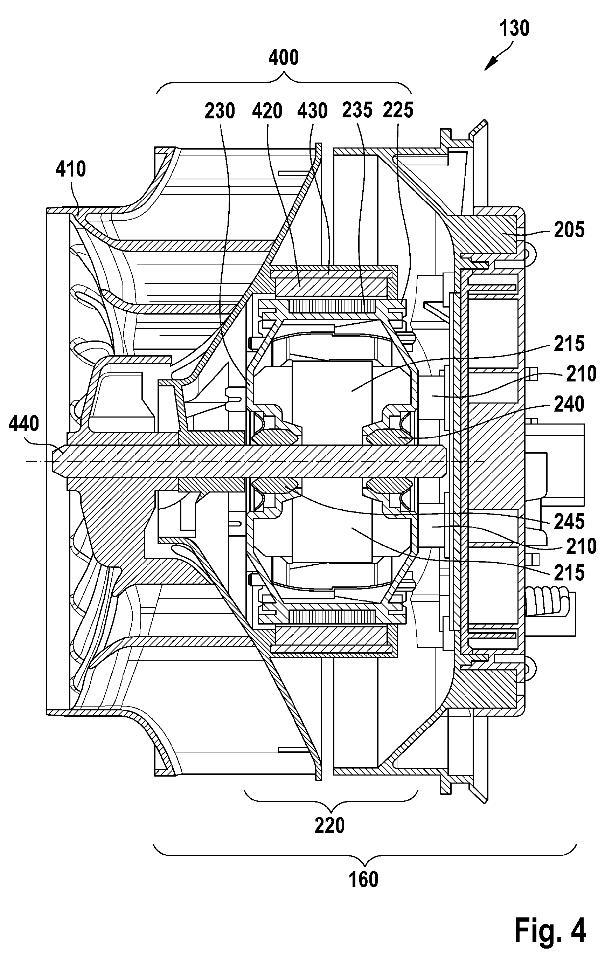

Figur 4 zeigt eine seitliche Schnittansicht eines Lüftermoduls 160 unter Verwendung des Antriebsmoduls 160 der Figur 1, der den Teil 200 der Figuren 2 und 3 umfasst. Zusätzlich zum Antriebsmodul 160 umfasst das Lüftermodul 130 ein Lüfterrad 410, Permanentmagneten 420, ein zweites magnetisches Flusselement 430 und eine Achse 440. In der gewählten Darstellung sind die Stützelemente 210 und die elastischen Entkopplungselemente 215 von außen, also in nicht geschnittenem Zustand dargestellt. Der Übersichtlichkeit halber sind auch keine Spulen am Stator 220 dargestellt. Das Lüftermodul 160 eignet sich universell für den Einsatz in Lüfteranlagen 120, 130, 140, wobei die hohe Raumausnutzung bei gleichzeitig guter Schwingungsdämpfung eine Verwendung in einem Kraftfahrzeug 110 besonders begünstigt.

Das Lüfterrad 410 ist von halbaxialen Typ, d. h. es umfasst Lüfterschaufeln zum Ansaugen von Luft aus axialer Richtung (von links) und Lüfterschaufeln zum Abströmen der angesaugten Luft in radialer Richtung. Mittels der Achse 440 ist das Lüfterrad 410 mit dem Antriebsmodul 160 verbunden. Die Achse 440 ist drehfest an dem Lüfterrad 410 befestigt, beispielsweise durch Anspritzen, Angießen, Einpressen, Kleben, Schweißen oder Passen. Ein Rotor 400 des Antriebsmoduls 160 wird durch die Permanentmagnete 420 und das zweite magnetische Flusselement 430 gebildet, die am Lüfterrad 410 drehfest angebracht sind. Das zweite magnetische Flusselement 430 stellt an einem Außenumfang der kranzförmig angeordneten Permanentmagnete 420 einen magnetischen Fluss her.

Die Achse 440 kann in ihrem dem Befestigungsflansch 205 zugewandten Ende gegen Herausgleiten aus dem unteren Rotationslager 240 gesichert sein. Diese Sicherung kann beispielsweise durch eine entsprechende, nicht dargestellte Montageöffnung im Befestigungsflansch 205 zugänglich sein, um das Lüfterrad 410 bei Bedarf vom Antriebsmodul 200 trennen zu können. Alternativ dazu kann die Achse 440 mittels einer nicht lösbaren Verbindung in axialer Richtung gegen Herausgleiten aus dem unteren Rotationslager 240 gesichert sein, beispielsweise mittels eines aufgepressten oder eingepassten Sicherungsrings, eines Seegerings oder eines anderen Elements mit vergleichbarer Wirkung.

Der Befestigungsflansch 205 ist so dimensioniert, dass er eine Montageöffnung, durch die das Lüfterrad 410 passieren kann, an seiner rechten Seite ausfüllt. Die Montageöffnung kann sich an einem Lufttrakt des Kraftfahrzeugs 110 aus Figur 1 befinden und beispielsweise kreisförmig sein.

## Patentansprüche

1. Antriebsmodul (160), insbesondere für einen Lüfter in einem Kraftfahrzeug, umfassend:
- einen Antriebsmotor mit einem Stator (220);
- wenigstens ein schwingungsdämpfendes Entkopplungselement (215); und
- einen Befestigungsflansch (205), der über das Entkopplungselement (215) mit dem Stator (220) des Antriebsmotors verbunden ist;
- wobei das Entkopplungselement (215) im Innenraum des Stators (220) angeordnet ist und der Befestigungsflansch (205) ein Stützelement (210) aufweist, das sich im Eingriff mit dem Entkopplungselement (215) befindet,
- wobei mehrere Entkopplungselemente (215) entlang eines Umfangs um die Drehachse des Antriebsmotors radialsymmetrisch angeordnet sind, wobei das Entkopplungselement (215) als Hohlzylinder ausgebildet ist, der eine mit einem Stützelement (210) in Eingriff stehende radiale Innenfläche und eine mit dem Stator (220) in Eingriff stehende radiale Außenfläche umfasst,
**dadurch gekennzeichnet, dass** der Stator (220) eine erste (225) und eine zweite Halterung (230) umfasst, und dass das Entkopplungselement (215) zwischen den beiden Halterungen (225, 230) formschlüssig befestigt ist.

2. Antriebsmodul (160) nach einem der vorangehenden Ansprüche, **dadurch gekennzeichnet, dass** das Stützelement (210) auf einer dem Befestigungsflansch (205) zugewandten Seite einen Absatz (260) aufweist, der axial an dem Entkopplungselement (215) anliegt.

3. Antriebsmodul (160) nach einem der vorangehenden Ansprüche, **dadurch gekennzeichnet, dass** das Stützelement (210) auf einer dem Befestigungsflansch (205) abgewandten Seite ein Sicherungselement (250) trägt, das axial an dem Entkopplungselement (215) anliegt.

4. Antriebsmodul (160) nach einem der vorangehenden Ansprüche, **dadurch gekennzeichnet, dass** der Stator (220) von einem Rotor (400) des Antriebsmotors umschlossen ist.

5. Antriebsmodul (160) nach einem der vorangehenden Ansprüche, **dadurch gekennzeichnet, dass** der Befestigungsflansch (205) in radialer Richtung eine Außenkontur des Antriebsmoduls (160) definiert.

6. Lüftermodul (130) mit einem Antriebsmodul (160) nach Anspruch 4, **gekennzeichnet durch** ein mit dem Rotor (400) verbundenes Lüfterrad (150).

## Claims

1. Drive module (160), in particular for a fan in a motor vehicle, comprising:
- a drive motor with a stator (220);
- at least one vibration-damping decoupling element (215); and
- a fastening flange (205) which is connected via the decoupling element (215) to the stator (220) of the drive motor;
- wherein the decoupling element (215) is arranged in the interior of the stator (220) and the fastening flange (205) has a supporting element (210) which is in engagement with the decoupling element (215),
- wherein a plurality of decoupling elements (215) are arranged radially symmetrically about the rotational axis of the drive motor along a circumference, wherein the decoupling element (215) is configured as a hollow cylinder which comprises a radial inner face which is in engagement with a supporting element (210) and a radial outer face which is in engagement with the stator (220),
**characterized in that** the stator (220) comprises a first (225) and a second holder (230), and **in that** the decoupling element (215) is fastened in a positively locking manner between the two holders (225, 230).

2. Drive module (160) according to one of the preceding claims, **characterized in that**, on a side which faces the fastening flange (205), the supporting element (210) has a shoulder (260) which bears axially against the decoupling element (215).

3. Drive module (160) according to one of the preceding claims, **characterized in that**, on a side which faces away from the fastening flange (205), the supporting element (210) carries a securing element (250) which bears axially against the decoupling element (215).

4. Drive module (160) according to one of the preceding claims, **characterized in that** the stator (220) is enclosed by a rotor (400) of the drive motor.

5. Drive module (160) according to one of the preceding claims, **characterized in that** the fastening flange (205) defines an outer contour of the drive module (160) in the radial direction.

6. Fan module (130) having a drive module (160) according to Claim 4, **characterized by** a fan wheel (150) which is connected to the rotor (400).

## Revendications

1. Module d'entraînement (160), en particulier pour un ventilateur dans un véhicule automobile, comprenant :
- un moteur d'entraînement avec un stator (220) ;
- au moins un élément de découplage amortissant les vibrations (215) ; et
- une bride de fixation (205) qui est connectée par le biais de l'élément de découplage (215) au stator (220) du moteur d'entraînement ;
- l'élément de découplage (215) étant disposé dans l'espace interne du stator (220) et la bride de fixation (205) présentant un élément de support (210) qui se trouve en prise avec l'élément de découplage (215),
- plusieurs éléments de découplage (215) étant disposés avec une symétrie radiale le long d'une périphérie autour de l'axe de rotation du moteur d'entraînement, l'élément de découplage (215) étant réalisé sous forme de cylindre creux qui comprend une surface interne radiale en prise avec un élément de support (210) et une surface externe radiale en prise avec le stator (220),
**caractérisé en ce que**
le stator (220) comprend une première (225) et une deuxième (230) fixation, et **en ce que** l'élément de découplage (215) est fixé par engagement par correspondance de formes entre les deux fixations (225, 230).

2. Module d'entraînement (160) selon l'une quelconque des revendications précédentes, **caractérisé en ce que** l'élément de support (210) présente, sur un côté tourné vers la bride de fixation (205) un épaulement (260) qui s'applique axialement contre l'élément de découplage (215).

3. Module d'entraînement (160) selon l'une quelconque des revendications précédentes, **caractérisé en ce que** l'élément de support (210), sur un côté opposé à la bride de fixation (205), porte un élément de fixation (250) qui s'applique axialement contre l'élément de découplage (215).

4. Module d'entraînement (160) selon l'une quelconque des revendications précédentes, **caractérisé en ce que** le stator (220) est entouré par un rotor (400) du moteur d'entraînement.

5. Module d'entraînement (160) selon l'une quelconque des revendications précédentes, **caractérisé en ce que** la bride de fixation (205) définit dans la direction radiale un contour extérieur du module d'entraînement (160).

6. Module de ventilateur (130) comprenant un module d'entraînement (160) selon la revendication 4, **caractérisé par** une roue de ventilateur (150) connectée au rotor (400).
